# EUROPEAN PATENT APPLICATION

(11) **EP 3 748 243 A1**
(43) Date of publication of application: **09.12.2020**
(21) Application number: 18902405.2
(22) Date of filing: 29.01.2018
(51) Int. Cl.: F24F 7/007, F24F 7/08, F24F 11/62, F24F 11/74, F24F 120/00

(54) **AIR CONDITIONING SYSTEM AND VENTILATION DEVICE**

(71) Applicant: Mitsubishi Electric Corporation, Tokyo 100-8310 (JP)
(72) Inventor: SOTOKAWA, Hajime, Tokyo 100-8310 (JP); OKEYA, Kenta, Tokyo 100-8310 (JP); KORETOMO, Masayuki, Tokyo 100-8310 (JP); TSUDA, Keishi, Tokyo 100-8310 (JP); TODA, Yuta, Tokyo 100-8310 (JP)
(74) Representative: Witte, Weller & Partner Patentanwälte mbB
(86) International application number: PCT/JP2018/002791
(87) International publication number: WO 2019/146121

(57) **Abstract**

An object of the present invention is to provide an air-conditioning system capable of reducing power consumed by ventilation. The air-conditioning system (1) includes: a ventilator (2) that ventilates the inside of a room and includes an exhaust fan (22) that sends air taken from the room to the outside, a supply fan (23) that sends air taken from the outside into the room, and a control unit (20) that controls a ventilation air volume of operation with the exhaust fan (22) and the supply fan (23); and a human detection sensor (35) that detects the presence or absence of a human in the room. The control unit (20) is capable of switching the ventilation air volume to at least a first air volume and a second air volume higher than the first air volume, and sets the ventilation air volume to the first air volume when the presence of a human is not detected by the human detection sensor (35).

## Description

### Field

The present invention relates to an air-conditioning system that performs air-conditioning and ventilation inside a room, and a ventilator included in the air-conditioning system.

### Background

An air-conditioning system including an air conditioner that performs air conditioning inside a room and a ventilator that performs room ventilation has been known. As for the ventilator, a heat exchange ventilator capable of switching between heat exchange ventilation, which is ventilation in combination with heat exchange between a supply air flow from the outside of a room to the inside and an exhaust air flow from the inside to the outside, and normal ventilation, which is ventilation without heat exchange between the supply air flow and the exhaust air flow, has been known.

The air-conditioning system brings the temperature of air taken into the room closer to the temperature inside the room by performing the heat exchange ventilation, to reduce the air-conditioning load of the air conditioner. In a case where the air-conditioning effect is produced by taking outside air directly into the room without heat exchange, the air-conditioning system performs the normal ventilation to maintain comfortable air environment in the room and reduce the air-conditioning load.

Patent Literature 1 teaches an air-conditioning system that controls ventilation air volume on the basis of the room temperature, the outdoor temperature, and the carbon dioxide (CO₂) concentration inside a room. CO₂ is one of contaminating components, which deteriorate air environment. As the number of humans in a room is larger, the CO₂ concentration becomes higher.

### Citation List

### Patent Literature

Patent Literature 1: Japanese Patent No. 3551124

### Summary

### Technical Problem

When one or more humans, who were present in the room, have left the room, the air-conditioning system of Patent Literature 1 may consume excessive power by ventilation by continuing ventilation with the ventilation air volume used until the humans left the room.

The present invention has been made in view of the above, and an object thereof is to provide an air-conditioning system capable of reducing power consumed by ventilation.

### Solution to Problem

To solve the above problem and achieve an object, there is provided an air-conditioning system according to the present invention including: a ventilator to ventilate an inside of a room, the ventilator including an exhaust fan to send air taken from the room to an outside, a supply fan to send air taken from the outside into the room, and a control unit to control a ventilation air volume of operation with the exhaust fan and the supply fan; and a human detection sensor to detect presence or absence of a human in the room, wherein the control unit is capable of switching the ventilation air volume to at least a first air volume and a second air volume higher than the first air volume, and sets the ventilation air volume to the first air volume when the presence of a human is not detected by the human detection sensor.

### Advantageous Effects of Invention

An air-conditioning system according to the present invention produces an effect of reducing power consumed by ventilation.

### Brief Description of Drawings

FIG. 1 is a diagram illustrating a configuration of an air-conditioning system according to a first embodiment of the present invention.
FIG. 2 is a block diagram illustrating functional configurations of a ventilator and an air conditioner included in the air-conditioning system according to the first embodiment.
FIG. 3 is a flowchart illustrating procedures for switching ventilation air volume of the ventilator by the air-conditioning system according to the first embodiment on the basis of a detection result from a human detection sensor.
FIG. 4 is a configuration diagram of a control unit in the air-conditioning system according to the first embodiment in a case where the functions of the control unit are implemented by dedicated hardware.
FIG. 5 is a configuration diagram of the control unit in the air-conditioning system according to the first embodiment in a case where the functions of the control unit are implemented by a processor that executes programs stored in a memory.
FIG. 6 is a diagram illustrating a configuration of an air-conditioning system according to a second embodiment of the present invention.
FIG. 7 is a block diagram illustrating functional configurations of a ventilator and an air conditioner included in the air-conditioning system according to the second embodiment.
FIG. 8 is a diagram illustrating a configuration of an air-conditioning system according to a third embodiment of the present invention.
FIG. 9 is a block diagram illustrating functional configurations of a ventilator and an air conditioner included in the air-conditioning system according to the third embodiment.
FIG. 10 is a diagram illustrating a configuration of an air-conditioning system according to a fourth embodiment of the present invention.
FIG. 11 is a block diagram illustrating functional configurations of a ventilator and an air conditioner included in the air-conditioning system according to the fourth embodiment.
FIG. 12 is a flowchart illustrating procedures for switching ventilation air volume of the ventilator by the air-conditioning system according to the fourth embodiment on the basis of a detection result from a human detection sensor.

### Description of Embodiments

An air-conditioning system and a ventilator according to embodiments of the present invention will be described in detail below with reference to the drawings. Note that the present invention is not limited to the embodiments.

### First Embodiment.

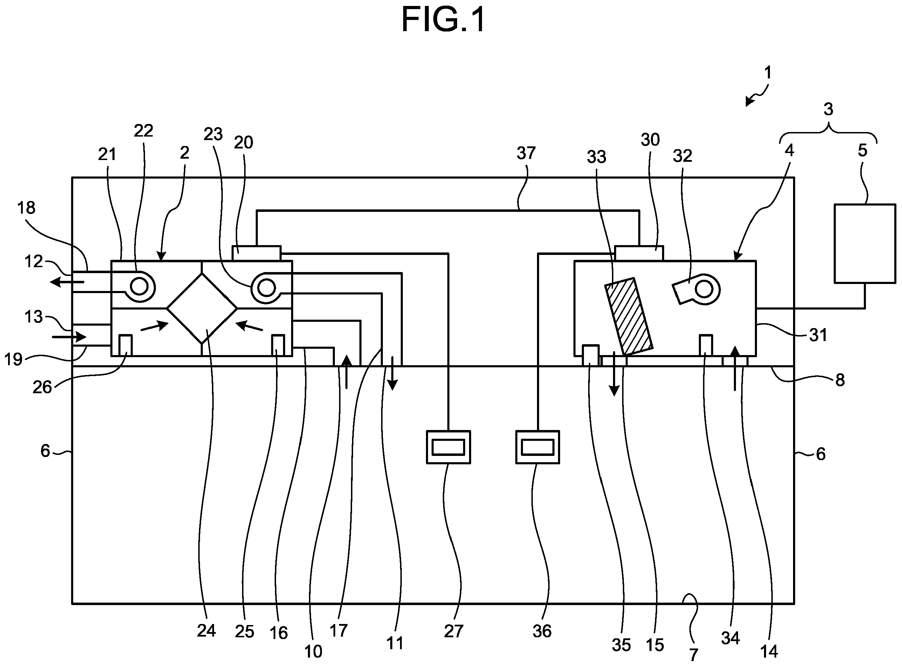

FIG. 1 is a diagram illustrating a configuration of an air-conditioning system 1 according to a first embodiment of the present invention. The air-conditioning system 1 includes a ventilator 2 that performs room ventilation, and an air conditioner 3 that performs room air conditioning. The air conditioner 3 performs cooling operation, heating operation, and fan only operation.

In FIG. 1, a room is a space surrounded by walls 6, a floor 7, and a ceiling 8 in a building. Outdoor or outside refers to outside of the building. The ventilator 2 is installed in a space above the ceiling 8. The ventilator 2 may be installed in a space inside the building other than the space above the ceiling 8. FIG. 1 schematically illustrates components provided inside the ventilator 2.

The ventilator 2 is a heat exchange ventilator capable of perform ventilation while carrying out heat exchange between a supply air flow and an exhaust air flow. The air-conditioning system 1 ventilates the room by supplying air from the outside into the room and exhausting air from the room to the outside to maintain comfortable air environment in the room. The air-conditioning system 1 performs heat exchange between the supply air flow and the exhaust air flow to reduce the temperature difference between air taken into the room and air inside the room, which reduces the load of room air conditioning performed by the air conditioner 3.

The ventilator 2 includes an exhaust fan 22 for sending air taken from the room to the outside, a supply fan 23 for sending air taken from the outside into the room, and a heat exchanger 24 for heat exchange between the exhaust air flow and the supply air flow. The exhaust fan 22, the supply fan 23, and the heat exchanger 24 are accommodated in a casing 21. In the casing 21, an exhaust air passage through which the exhaust air flow passes, and a supply air passage through which the supply air flow passes are formed.

The exhaust fan 22 is driven by a motor to generate the exhaust air flow. The supply fan 23 is driven by a motor to generate the supply air flow. In FIG. 1, the motor of the exhaust fan 22 and the motor of the supply fan 23 are not illustrated. The heat exchanger 24 includes a primary side air passage through which the exhaust air flow passes, and a secondary side air passage through which the supply air flow passes. The heat exchanger 24 performs total heat exchange between the exhaust air flow passing through the exhaust air passage and the supply air flow passing through the supply air passage.

The exhaust air flow passes through an exhaust port 10 provided on the ceiling 8 and is taken into the ventilator 2 via a duct 16. The exhaust air flow having passed through the exhaust air passage of the ventilator 2 passes through a duct 18, and is forced out to the outside through an exhaust port 12 provided on a wall 6. The supply air flow passes through a supply port 13 provided on a wall 6 and is taken into ventilator 2 via a duct 19. The supply air flow having passed through the supply air passage of the ventilator 2 passes through a duct 17, and is forced out into the room through a supply port 11 provided on the ceiling 8.

In the casing 21, a damper for switching the exhaust air passage of the exhaust air flow, which flows into the casing 21 from the duct 16, between an air passage to the heat exchanger 24 and a bypass air passage bypassing the heat exchanger 24 is provided. The ventilator 2 performs heat exchange ventilation with the damper blocking the bypass air passage so that the exhaust air flow goes to the heat exchanger 24. The ventilator 2 performs normal ventilation with the damper blocking the air passage, through which the exhaust air flow goes to the heat exchanger 24, so that the exhaust air flow goes to the bypass air passage. The ventilator 2 switches between the heat exchange ventilation and the normal ventilation by driving the damper. Note that, in FIG. 1, the damper and the bypass air passage are not illustrated.

In the normal ventilation, the ventilator 2 sends the supply air flow that is not subjected to heat exchange with the exhaust air flow by the heat exchanger 24 into the room. When the outdoor temperature is more comfortable than the temperature inside the room, the air-conditioning system 1 performs normal ventilation to send air at the more comfortable temperature from the outside into the room, so as to make the temperature in the room comfortable, and reduce the air-conditioning load.

A temperature sensor 25 is installed on the exhaust air passage. The temperature sensor 25 measures the temperature of air taken from the room into the ventilator 2. A temperature sensor 26 is installed on the supply air passage. The temperature sensor 26 measures the temperature of air taken from the outside into the ventilator 2. The ventilator 2 measures the outdoor temperature by the temperature sensor 26. An example of the temperature sensors 25 and 26 is a thermistor. The temperature sensors 25 and 26 may be thermocouples, or other temperature detecting means.

The ventilator 2 includes a control unit 20 that controls ventilation air volume of operation with the exhaust fan 22 and the supply fan 23. The control unit 20 controls the entire ventilator 2 including control of the ventilation air volume. The control unit 20 is installed on an outer face of the casing 21. The control unit 20 controls the ventilation air volume of the ventilator 2 by controlling driving of the motor of the exhaust fan 22 and driving of the motor of the supply fan 23. The ventilation air volume is the air volume of the supply air flow and the exhaust air flow. The control unit 20 also switches between the heat exchange ventilation and the normal ventilation by controlling driving of the damper.

A remote controller 27 is installed inside the room. The remote controller 27 receives various commands to the ventilator 2 such as turning the ventilator 2 on or off, switching the ventilation air volume, switching between the heat exchange ventilation and the normal ventilation, and operating an operation timer. The remote controller 27 transmits a command received from a user to the control unit 20. The control unit 20 controls the operation of the ventilator 2 on the basis of the command received from the remote controller 27.

The air conditioner 3 includes indoor equipment 4 installed inside the building, and outdoor equipment 5 installed outside thereof. The air conditioner 3 performs room air conditioning by transferring heat between room air and outside air by using refrigerant circulating between the indoor equipment 4 and the outdoor equipment 5. In FIG. 1, the indoor equipment 4 is installed in the space above the ceiling 8. The indoor equipment 4 may be installed in a space inside the building other than the space above the ceiling 8. The indoor equipment 4 may be installed inside the room. FIG. 1 schematically illustrates components provided inside the indoor equipment 4. Components provided inside the outdoor equipment 5 are not illustrated.

The indoor equipment 4 includes a circulation fan 32 for circulating air taken from the room into the room, and a heat exchanger 33 that performs heat exchange between the refrigerant and air. The circulation fan 32 is driven by a motor to generate a circulating air flow. In FIG. 1, the motor of the circulation fan 32 is not illustrated. The circulation fan 32 and the heat exchanger 33 are accommodated in a casing 31. In the casing 31, refrigerant pipes through which the refrigerant flows, and an expansion valve for expanding the refrigerant are provided. In FIG. 1, the refrigerant pipes and the expansion valve are not illustrated. The outdoor equipment 5 includes a fan for taking in and forcing out air between the inside and outside of the outdoor equipment 5, a heat exchanger that performs heat exchange between air and the refrigerant, and a compressor for compressing the refrigerant.

The circulating air flow is taken into the casing 31 through an inlet port 14 provided on the ceiling 8. The circulating air flow passes through the casing 31, and a circulation port 15 provided on the ceiling 8, and is forced out into the room. In the casing 31, a temperature sensor 34 for measuring the temperature of air taken from the room into the indoor equipment 4 is provided. An example of the temperature sensor 34 is a thermistor. The temperature sensor 34 may be a thermocouple, or other temperature measuring means.

A human detection sensor 35 for detecting the presence or absence of a human in the room is provided in the indoor equipment 4. The human detection sensor 35 detects the presence of a human on the basis of a change in the amount of received infrared light within a detection range. The human detection sensor 35 may be detecting means using a captured image or other detecting means.

In the cooling operation, the air conditioner 3 causes the heat exchanger 33 of the indoor equipment 4 to function as an evaporator, and causes the heat exchanger of the outdoor equipment 5 to function as a condenser. In the heating operation, the air conditioner 3 causes the heat exchanger 33 of the indoor equipment 4 to function as a condenser, and causes the heat exchanger of the outdoor equipment 5 to function as an evaporator. In the cooling operation and the heating operation, the air conditioner 3 drives the circulation fan 32 of the indoor equipment 4 and the fan of the outdoor equipment 5. In the fan only operation, the air conditioner 3 drives the circulation fan 32 of the indoor equipment 4, and stops driving of the fan and the compressor of the outdoor equipment 5.

The air conditioner 3 includes a control unit 30 that controls the entire air conditioner 3. The control unit 30 is installed on an outer face of the casing 31 of the indoor equipment 4. The indoor equipment 4 and the outdoor equipment 5 are driven in accordance with the control performed by the control unit 30.

A remote controller 36 is installed inside the room. The remote controller 36 receives various commands to the air conditioner 3 such as turning the air conditioner 3 on or off, switching between cooling, heating, and fan only operations, switching a level of the air volume and the direction of the circulating air flow forced out from the air conditioner 3, switching temperature setting, and operating an operation timer. The remote controller 36 transmits a command received from a user to the control unit 30. The control unit 30 controls the operation of the air conditioner 3 on the basis of the command received from the remote controller 36.

The control unit 20 of the ventilator 2 and the control unit 30 of the air conditioner 3 are connected with each other via a signal line 37. The control unit 30 transmits a command to the control unit 20 via the signal line 37. The control unit 20 controls the ventilator 2 in accordance with the command from the control unit 30. In this manner, the air-conditioning system 1 operates the ventilator 2 in conjunction with the air conditioner 3.

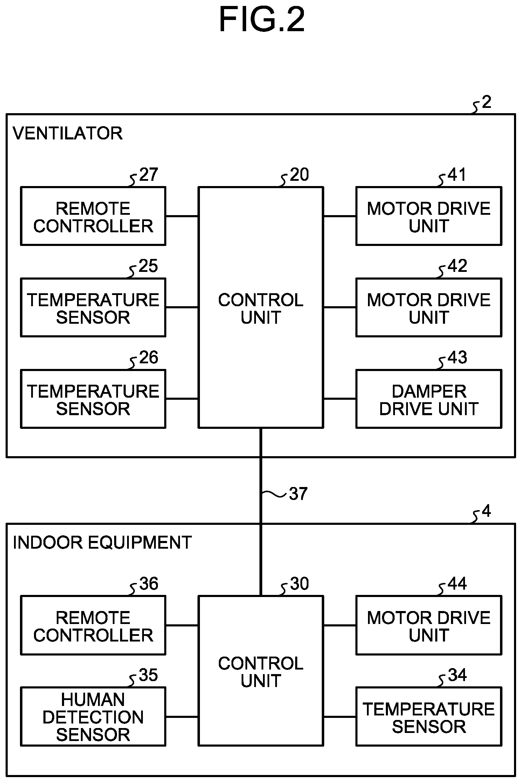

FIG. 2 is a block diagram illustrating functional configurations of the ventilator 2 and the air conditioner 3 included in the air-conditioning system 1 according to the first embodiment. In FIG. 2, the components of the indoor equipment 4 of the air conditioner 3 are illustrated, and the components of the outdoor equipment 5 thereof are not illustrated. In FIG. 2, for convenience, the control unit 30 of the air conditioner 3 is illustrated as being included in the components of the indoor equipment 4.

The control unit 20 of the ventilator 2 is connected with the remote controller 27, the temperature sensors 25 and 26, and motor drive units 41 and 42, and a damper drive unit 43. The motor drive unit 41 is a drive circuit that drives the motor of the exhaust fan 22. The motor drive unit 42 is a drive circuit that drives the motor of the supply fan 23. The damper drive unit 43 is a drive circuit that drives the damper. The ventilator 2 switches between on and off of the ventilator 2 and switches the ventilation air volume by control of the motor drive units 41 and 42 performed by the control unit 20. The ventilator 2 switches between the heat exchange ventilation and the normal ventilation by control of the damper drive unit 43 performed by the control unit 20.

The ventilator 2 is capable of performing operation in conjunction with the air conditioner 3, and independent operation that is not in conjunction with the air conditioner 3. The ventilator 2 performs the independent operation on the basis of a command received from the remote controller 27. When temperature control in the room by the air conditioner 3 is not needed, the air-conditioning system 1 stops the operation of the air conditioner 3 and ventilates the room by the operation of the ventilator 2.

The control unit 30 of the air conditioner 3 is connected with the remote controller 36, the human detection sensor 35, a motor drive unit 44, and the temperature sensor 34. The motor drive unit 44 is a drive circuit that drives the motor of the circulation fan 32. The control unit 30 is also connected with a drive circuit that drives the expansion valve. In FIG. 2, the drive circuit of the expansion valve is not illustrated. The control unit 30 controls the motor drive unit 44, the drive circuit of the expansion valve, and the components of the outdoor equipment 5 on the basis of a set temperature set by the remote controller 36.

The control unit 30 is capable of controlling the air volume and the direction of the circulating air flow forced out from the air conditioner 3 on the basis of a detection result from the human detection sensor 35. The air-conditioning system 1 operates the air conditioner 3 depending on the presence of a human in the room, which enables maintenance of comfortable air environment and reduction in power consumption through efficient air conditioning. The control unit 30 is also capable of controlling the set temperature on the basis of a detection result from the temperature sensor 34. The air-conditioning system 1 operates the air conditioner 3 depending on the room temperature, which enables maintenance of a comfortable room temperature and reduction in power consumption through efficient air conditioning.

The air-conditioning system 1 may switch between the heat exchange ventilation and the normal ventilation of the ventilator 2 depending on comparison between the set temperature of the air conditioner 3, the room temperature detected by the temperature sensor 25, and the outdoor temperature detected by the temperature sensor 26. In one example, if the outdoor temperature and the set temperature are lower than the room temperature when the air conditioner 3 performs the cooling operation, the air-conditioning system 1 causes the ventilator 2 to perform the normal ventilation, which enables improvement of the cooling efficiency of the air conditioner 3 and reduction in power consumption.

The air-conditioning system 1 may also control the ventilation air volume of the ventilator 2 on the basis of a detection result from the human detection sensor 35. As the number of humans in the room is larger, the air-conditioning system 1 makes the ventilation air volume larger, so as to let the air containing much CO₂, which is one of contaminating components, out of the room and take fresh outdoor air into the room. This enables the air-conditioning system 1 to reduce the CO₂ concentration in the room and maintain the air environment in the room in a comfortable state.

In the first embodiment, the control unit 20 is capable of switching the ventilation air volume between three air volume settings, which are a high air volume, a middle air volume, and a low air volume. When a human is present in the room, the control unit 20 sets the ventilation air volume to the middle air volume or higher. The control unit 20 may determine the number of humans present in the room, and control the ventilation air volume on the basis of a result of comparison between the number of humans and a preset threshold. The control unit 20 may set the ventilation air volume to the high air volume when the number of humans present in the room is larger than the threshold, and set the ventilation air volume to the middle air volume when the number of humans present in the room is equal to or smaller than the threshold. Note that the number of air volume settings is not limited to three, and may be any number not smaller than two.

When the presence of a human is not detected by the human detection sensor 35, the control unit 20 sets the ventilation air volume to the lowest of a plurality of air volume settings. In the first embodiment, when the presence of a human is not detected, the control unit 20 sets the ventilation air volume to the low air volume, which is the lowest air volume setting. When there remains no human in the room, the air-conditioning system 1 switches the ventilation air volume in prior to the setting used until the human left the room, to forcibly change the ventilation air volume from the high air volume or the middle air volume to the low air volume.

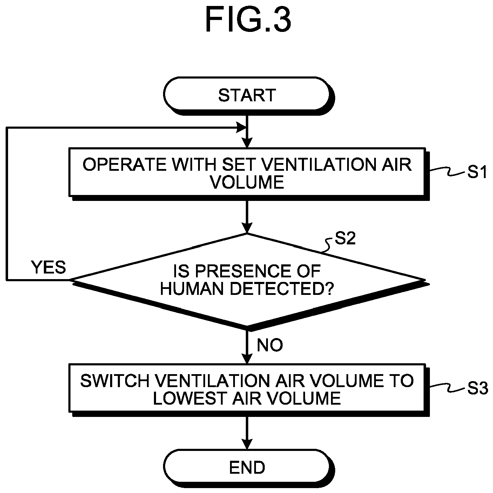

FIG. 3 is a flowchart illustrating procedures for switching the ventilation air volume of the ventilator 2 by the air-conditioning system 1 according to the first embodiment on the basis of a detection result from the human detection sensor 35. Assume a state in which one or more humans are present in the room at the start of the procedures illustrated in FIG. 3. In step S1, the air-conditioning system 1 is operating the ventilator 2 with a set ventilation air volume, which is the middle air volume or the high air volume. When the presence of a human is detected by the human detection sensor 35, the control unit 20 determines the number of humans on the basis of the detection result from the human detection sensor 35, and controls the ventilation air volume.

In step S2, the air-conditioning system 1 determines by the control unit 20 whether or not the presence of a human in the room is detected on the basis of a detection result from the human detection sensor 35. When the presence of a human is detected (step S2, Yes), the air-conditioning system 1 returns the procedure to step S1, and continues the operation of the ventilator 2 with the set ventilation air volume.

When the presence of a human is not detected (step S2, No), the control unit 20 sets the ventilation air volume to the lowest air volume setting regardless of determination based on the detection result from the human detection sensor 35. When the presence of a human is no longer detected by the human detection sensor 35, the air-conditioning system 1 switches the ventilation air volume of the ventilator 2 from a second air volume, which is the middle air volume or the high air volume, to a first air volume, which is the low air volume, in step S3. The air-conditioning system 1 thus terminates the switching of the ventilation air volume according to the procedures illustrated in FIG. 3.

When one or more humans who were present in the room have left the room, the air-conditioning system 1 switches the ventilation air volume to the lowest air volume, which reduces power consumption as compared with a case where ventilation with the ventilation air volume used until immediately before the humans left the room is continued. Note that, in a case where the presence of a human is detected again by the human detection sensor 35 after the humans left the room, the air-conditioning system 1 switches the ventilation air volume from the low air volume to the middle air volume or the high air volume in accordance with the settings.

The functions of the control unit 20 of the ventilator 2 are implemented by a processing circuitry. The ventilator 2 includes the processing circuitry for controlling the operation of the ventilator 2. The processing circuitry may be dedicated hardware, or a processor that executes programs stored in a memory.

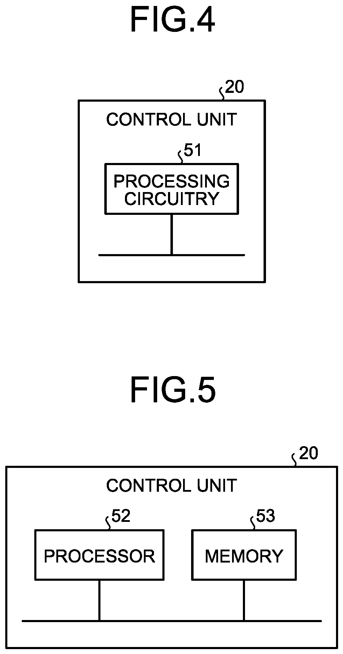

FIG. 4 is a configuration diagram of the control unit 20 in the air-conditioning system 1 according to the first embodiment in a case where the functions of the control unit 20 are implemented by dedicated hardware. A processing circuitry 51, which is dedicated hardware, is a single circuit, a composite circuit, a programmed processor, a parallel-programmed processor, an application specific integrated circuit (ASIC), a field-programmable gate array (FPGA), or a combination thereof.

FIG. 5 is a configuration diagram of the control unit 20 in the air-conditioning system 1 according to the first embodiment in a case where the functions of the control unit 20 are implemented by a processor that executes programs stored in a memory. A processor 52 is a central processing unit (CPU), a processing device, an arithmetic device, a microprocessor, a microcomputer, or a digital signal processor (DSP). The functions of the control unit 20 are implemented by the processor 52, and software, firmware, or a combination of software and firmware. The software or firmware is described in the form of programs and stored in a memory 53. The memory 53 is a built-in memory such as a nonvolatile or volatile semiconductor memory such as a random access memory (RAM), a read-only memory (ROM), a flash memory, an erasable programmable read-only memory (EPROM), or an electrically erasable programmable read-only memory (EEPROM: registered trademark).

Some of the functions of the control unit 20 may be implemented by dedicated hardware, and others of the functions of the control unit 20 may be implemented by software or firmware. As described above, the functions of the control unit 20 can be implemented by hardware, software, firmware, or a combination thereof. Note that the functions of the control unit 30 of the air conditioner 3 are implemented by a processing circuitry for controlling the operation of the air conditioner 3 in a manner similar to the functions of the control unit 20 of the ventilator 2. The functions of the control unit 30 can be implemented in a manner similar to the functions of the control unit 20.

According to the first embodiment, when the presence of a human is not detected by the human detection sensor 35, the control unit 20 sets the ventilation air volume to the lowest of a plurality of air volume settings. As a result, the air-conditioning system 1 produces an effect of reducing power consumed by ventilation.

### Second Embodiment.

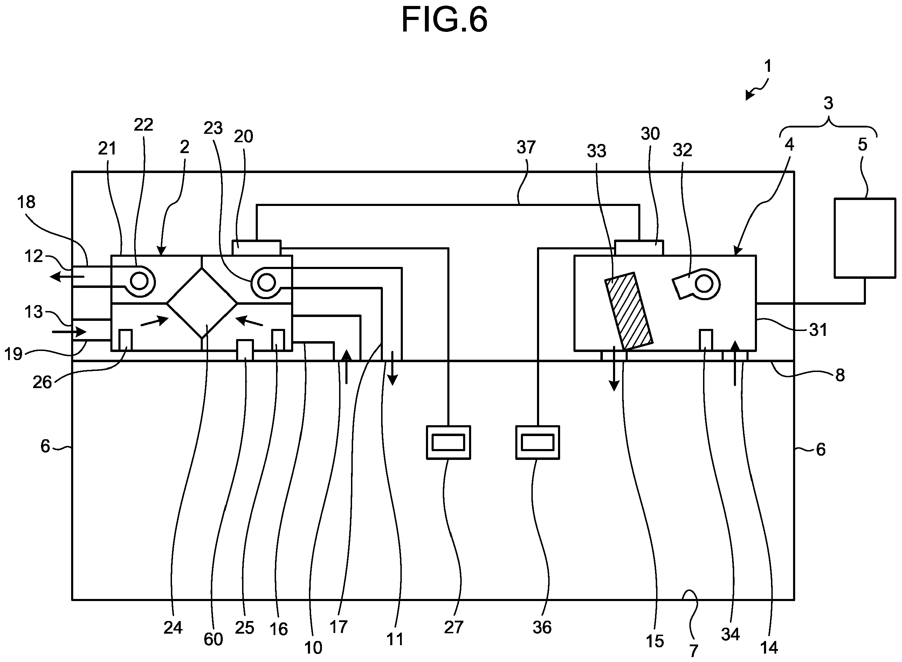

FIG. 6 is a diagram illustrating a configuration of an air-conditioning system 1 according to a second embodiment of the present invention. In the air-conditioning system 1 according to the second embodiment, a human detection sensor 60 is provided in the ventilator 2 instead of the human detection sensor 35 in the indoor equipment 4 illustrated in FIG. 1. The configuration of the air-conditioning system 1 according to the second embodiment other than the human detection sensor 60 is similar to that of the air-conditioning system 1 according to the first embodiment. In the second embodiment, components that are the same as those in the first embodiment will be represented by the same reference numerals, and features different from those in the first embodiment will be mainly described.

The human detection sensor 60 detects the presence or absence of a human in the room in a manner similar to the human detection sensor 35 in the first embodiment. The human detection sensor 60 detects the presence of a human on the basis of a change in the amount of infrared light within a detection range. The human detection sensor 60 may be detecting means using a captured image or other detecting means.

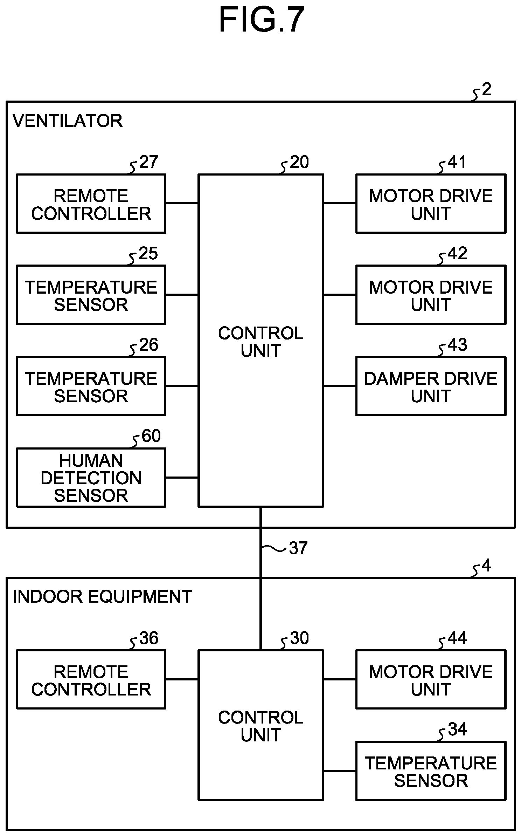

FIG. 7 is a block diagram illustrating functional configurations of the ventilator 2 and the air conditioner 3 included in the air-conditioning system 1 according to the second embodiment. In FIG. 7, the components of the indoor equipment 4 of the air conditioner 3 are illustrated, but the components of the outdoor equipment 5 thereof are not illustrated. In FIG. 7, for convenience, the control unit 30 of the air conditioner 3 is illustrated as being included in the components of the indoor equipment 4.

The control unit 20 of the ventilator 2 is connected with the remote controller 27, the temperature sensors 25 and 26, the human detection sensor 60, the motor drive units 41 and 42, and the damper drive unit 43. The control unit 20 controls the ventilation air volume of the ventilator 2 on the basis of a detection result from the human detection sensor 60. The air-conditioning system 1 controls the ventilation air volume depending on the presence or absence of a human in the room, which reduces the CO₂ concentration in the room and maintains the air environment in the room in a comfortable state.

The air-conditioning system 1 may control the air volume and the direction of the circulating air flow forced out from the air conditioner 3 on the basis of a detection result from the human detection sensor 60. The air-conditioning system 1 operates the air conditioner 3 depending on the presence of a human in the room, which enables maintenance of comfortable air environment and reduction in power consumption through efficient air conditioning.

When the presence of a human is not detected by the human detection sensor 60, the control unit 20 sets the ventilation air volume to the lowest of a plurality of air volume settings. In the second embodiment, in a manner similar to the first embodiment, when the presence of a human is not detected, the control unit 20 sets the ventilation air volume to the low air volume, which is the lowest air volume setting. When no human remains in the room, the air-conditioning system 1 switches the ventilation air volume in prior to the setting used until the human left the room, to forcibly change the ventilation air volume from the high air volume or the middle air volume to the low air volume.

According to the second embodiment, the air-conditioning system 1 controls the ventilation air volume in a manner similar to the first embodiment, which produces an effect of reducing power consumed by ventilation.

### Third Embodiment.

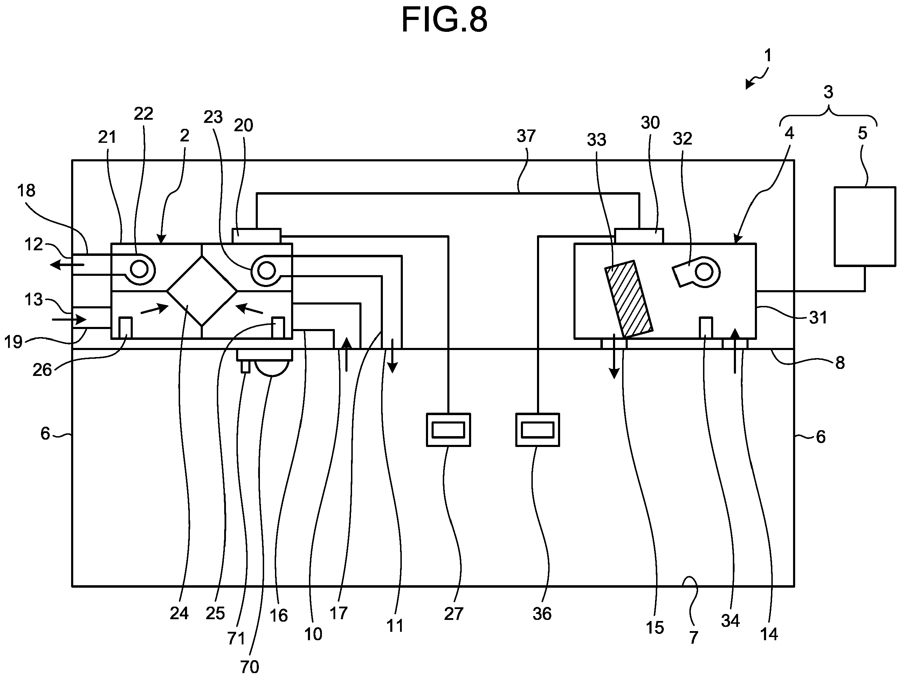

FIG. 8 is a diagram illustrating a configuration of an air-conditioning system 1 according to a third embodiment of the present invention. The air-conditioning system 1 according to the third embodiment includes a human detection sensor 71 mounted on a lighting equipment 70 instead of the human detection sensor 35 of the indoor equipment 4 illustrated in FIG. 1. The human detection sensor 71 is provided in the lighting equipment 70, which is a device other than the ventilator 2 and the air conditioner 3. The configuration of the air-conditioning system 1 according to the third embodiment other than the human detection sensor 71 is similar to that of the air-conditioning system 1 according to the first embodiment. In the third embodiment, components that are the same as those in the first embodiment will be represented by the same reference numerals, and features different from those in the first embodiment will be mainly described.

The lighting equipment 70 is installed on the ceiling 8. The lighting equipment 70 lights the inside of the room. The human detection sensor 71 detects the presence or absence of a human in the room in a manner similar to the human detection sensor 35 in the first embodiment. The human detection sensor 71 detects the presence of a human on the basis of a change in the amount of infrared light within a detection range. The human detection sensor 71 may be detecting means using a captured image or other detecting means. The lighting equipment 70 is capable of controlling on and off of the lighting on the basis of a detection result from the human detection sensor 71. The human detection sensor 71 has both of a detecting function for control of the lighting by the lighting equipment 70 and a detecting function for control of the ventilation air volume by the air-conditioning system 1.

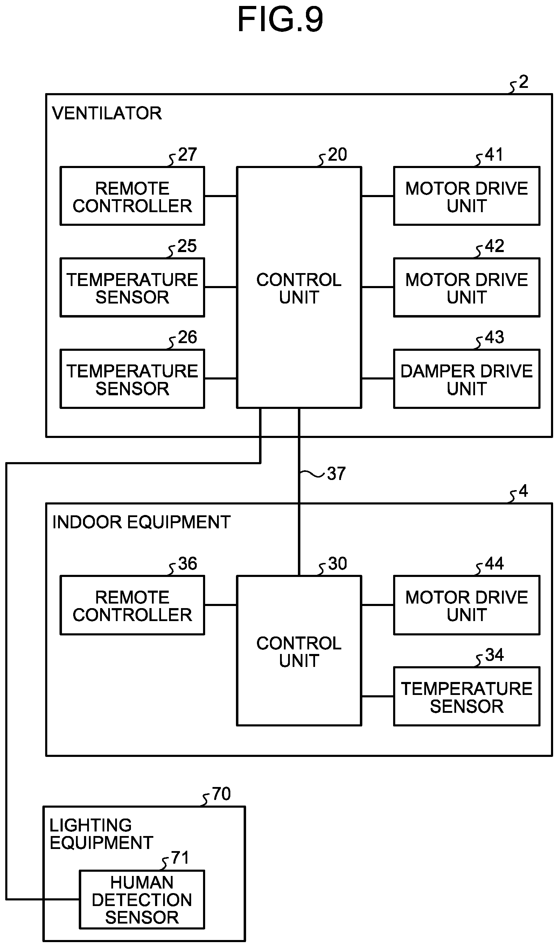

FIG. 9 is a block diagram illustrating functional configurations of the ventilator 2 and the air conditioner 3 included in the air-conditioning system 1 according to the third embodiment. In FIG. 9, the components of the indoor equipment 4 of the air conditioner 3 are illustrated, and the components of the outdoor equipment 5 thereof are not illustrated. In FIG. 9, for convenience, the control unit 30 of the air conditioner 3 is illustrated as being included in the components of the indoor equipment 4.

The control unit 20 of the ventilator 2 is connected with the remote controller 27, the temperature sensors 25 and 26, the motor drive units 41 and 42, the damper drive unit 43, and the human detection sensor 71. The control unit 20 controls the ventilation air volume of the ventilator 2 on the basis of a detection result from the human detection sensor 71. The air-conditioning system 1 controls the ventilation air volume depending on the presence or absence of a human in the room, which reduces the CO₂ concentration in the room and maintains the air environment in the room in a comfortable state.

The air-conditioning system 1 may control the air volume and the direction of the circulating air flow forced out from the air conditioner 3 on the basis of a detection result from the human detection sensor 71. The air-conditioning system 1 operates the air conditioner 3 depending on the presence of a human in the room, which enables maintenance of comfortable air environment and reduction in power consumption through efficient air conditioning.

When the presence of a human is not detected by the human detection sensor 71, the control unit 20 sets the ventilation air volume to the lowest of a plurality of air volume settings. In the third embodiment, in a manner similar to the first embodiment, when the presence of a human is not detected, the control unit 20 sets the ventilation air volume to the low air volume that is the lowest air volume setting. When no human remains in the room, the air-conditioning system 1 switches the ventilation air volume in prior to the setting used until the human left the room, to forcibly change the ventilation air volume from the high air volume or the middle air volume to the low air volume.

The human detection sensor 71 may be provided at any position other than positions in the ventilator 2 and the air conditioner 3, and may be included in a device other than the lighting equipment 70. The human detection sensor 71 may be mounted on a local ventilation fan installed in the room, for example. The human detection sensor 71 may be an independent device installed on the ceiling 8 or a wall 6 in the room.

According to the third embodiment, the air-conditioning system 1 controls the ventilation air volume in a manner similar to the first embodiment, which produces an effect of reducing power consumed by ventilation.

### Fourth Embodiment.

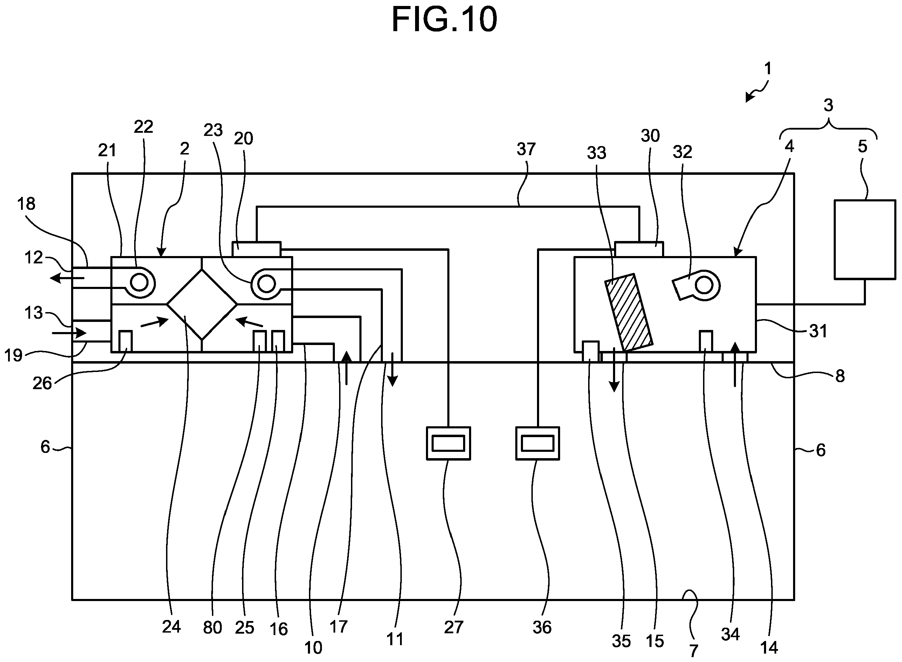

FIG. 10 is a diagram illustrating a configuration of an air-conditioning system 1 according to a fourth embodiment of the present invention. The air-conditioning system 1 according to the fourth embodiment includes a CO₂ sensor 80 in addition to the configuration of the air-conditioning system 1 of the first embodiment. In the fourth embodiment, components that are the same as those in the first embodiment will be represented by the same reference numerals, and features different from those in the first embodiment will be mainly described.

The CO₂ sensor 80 is installed on the exhaust air passage of the ventilator 2. The CO₂ sensor 80 measures the CO₂ concentration in the room by detecting CO₂ contained in air taken from the room into the ventilator 2.

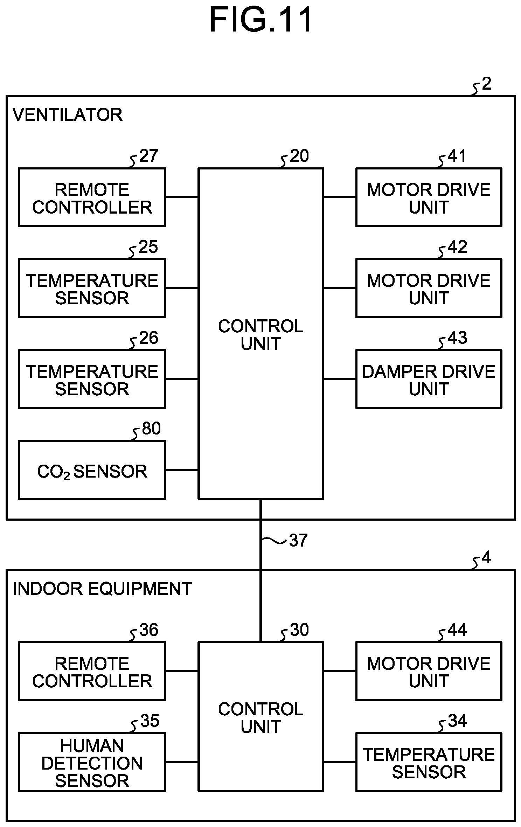

FIG. 11 is a block diagram illustrating functional configurations of the ventilator 2 and the air conditioner 3 included in the air-conditioning system 1 according to the fourth embodiment. In FIG. 11, the components of the indoor equipment 4 of the air conditioner 3 are illustrated, but the components of the outdoor equipment 5 thereof are not illustrated. In FIG. 11, for convenience, the control unit 30 of the air conditioner 3 is illustrated as being included in the components of the indoor equipment 4.

The control unit 20 of the ventilator 2 is connected with the remote controller 27, the temperature sensors 25 and 26, the CO₂ sensor 80, the motor drive units 41 and 42, and the damper drive unit 43. The control unit 20 controls the ventilation air volume on the basis of a measurement result from the CO₂ sensor 80. As the number of humans in the room is larger, the air-conditioning system 1 makes the ventilation air volume larger, so as to let the air containing much CO₂, which is one of contaminating components, out of the room and take fresh outdoor air into the room. This enables the air-conditioning system 1 to reduce the CO₂ concentration in the room and maintain the air environment in the room in a comfortable state.

In the fourth embodiment, in a manner similar to the first embodiment, the control unit 20 is capable of switching the ventilation air volume between three air volume settings, which are a high air volume, a middle air volume, and a low air volume. The control unit 20 may compare a measured CO₂ concentration with a preset threshold to determine the level of CO₂ concentration. When a human is present in the room, the control unit 20 may set the ventilation air volume to the middle air volume or higher when the CO₂ concentration is determined to be low, and may set the ventilation air volume to the high air volume when the result of determination of the CO₂ concentration is high. Note that the number of air volume settings is not limited to three, and may be any number not smaller than two.

When the presence of a human is not detected by the human detection sensor 35, the control unit 20 sets the ventilation air volume to the lowest of a plurality of air volume settings. In the fourth embodiment, in a manner similar to the first embodiment, the control unit 20 sets the ventilation air volume to the low air volume that is the lowest air volume setting when the presence of a human is not detected. When no human remains in the room, the air-conditioning system 1 switches the ventilation air volume in prior to the setting used until the human left the room, to forcibly change the ventilation air volume from the high air volume or the middle air volume to the low air volume.

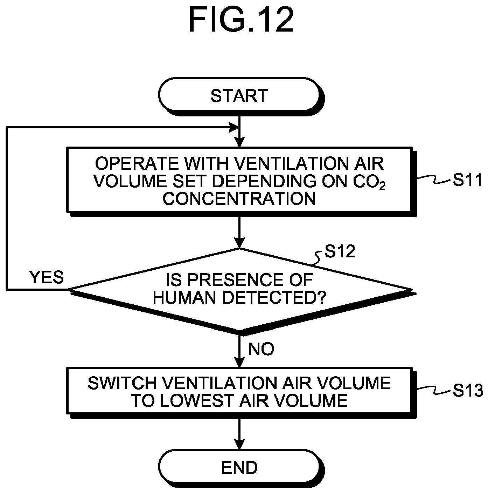

FIG. 12 is a flowchart illustrating procedures for switching the ventilation air volume of the ventilator 2 by the air-conditioning system 1 according to the fourth embodiment on the basis of a detection result from the human detection sensor 35. Assume a state in which one or more humans are present in the room at the start of the procedures illustrated in FIG. 12. In step S11, the air-conditioning system 1 is operating the ventilator 2 with the middle air volume or the high air volume, which is a ventilation air volume set depending on the CO₂ concentration. When the presence of a human is detected by the human detection sensor 35, the control unit 20 controls the ventilation air volume on the basis of a measurement result from the CO₂ sensor 80.

In step S12, the air-conditioning system 1 determines by the control unit 20 whether or not the presence of a human in the room is detected on the basis of a detection result from the human detection sensor 35. When the presence of a human is detected (step S12, Yes), the air-conditioning system 1 returns the procedure to step S11, and continues the operation of the ventilator 2 with the set ventilation air volume.

When the presence of a human is not detected (step S12, No), the control unit 20 sets the ventilation air volume to the lowest air volume setting regardless of the measurement result from the CO₂ sensor 80. When the presence of a human is no longer detected by the human detection sensor 35, the air-conditioning system 1 switches the ventilation air volume from the middle air volume or the high air volume to the low air volume that is the lowest air volume, in step S13. The air-conditioning system 1 thus terminates the switching of the ventilation air volume according to the procedures illustrated in FIG. 12.

When the humans who were present in the room have left the room, the air-conditioning system 1 switches the ventilation air volume to the lowest air volume, which reduces power consumption as compared with a case where ventilation with the ventilation air volume used until immediately before the humans left the room is continued. Note that, in a case where the presence of a human is detected again by the human detection sensor 35 after the humans left the room, the air-conditioning system 1 switches the ventilation air volume from the low air volume to the middle air volume or the high air volume in accordance with the settings depending on the CO₂ concentration.

According to the fourth embodiment, the air-conditioning system 1 controls the ventilation air volume in a manner similar to the first embodiment, which produces an effect of reducing power consumed by ventilation. Note that CO₂ sensor 80 may be provided in the indoor equipment 4, or in another device other than the ventilator 2 and the air conditioner 3. The CO₂ sensor 80 may be an independent device installed on the ceiling 8 or a wall 6 in the room. The CO₂ sensor 80 may be added to the configuration of the air-conditioning system 1 of the second or third embodiment.

The configurations presented in the embodiments above are examples of the present invention, and can be combined with other known technologies or can be partly omitted or modified without departing from the scope of the present invention.

### Reference Signs List

1 air-conditioning system; 2 ventilator; 3 air conditioner; 4 indoor equipment; 5 outdoor equipment; 6 wall; 7 floor; 8 ceiling; 10, 12 exhaust port; 11, 13 supply port; 14 inlet port; 15 circulation port; 16, 17, 18, 19 duct; 20, 30 control unit; 21, 31 casing; 22 exhaust fan; 23 supply fan; 24, 33 heat exchanger; 25, 26, 34 temperature sensor; 27, 36 remote controller; 32 circulation fan; 35, 60, 71 human detection sensor; 37 signal line; 41, 42, 44 motor drive unit; 43 damper drive unit; 51 processing circuitry; 52 processor; 53 memory; 70 lighting equipment; 80 CO₂ sensor.

## Claims

1. An air-conditioning system comprising:
a ventilator to ventilate an inside of a room, the ventilator including an exhaust fan to send air taken from the room to an outside, a supply fan to send air taken from the outside into the room, and a control unit to control a ventilation air volume of operation with the exhaust fan and the supply fan; and
a human detection sensor to detect presence or absence of a human in the room, wherein
the control unit is capable of switching the ventilation air volume to at least a first air volume and a second air volume higher than the first air volume, and sets the ventilation air volume to the first air volume when the presence of a human is not detected by the human detection sensor.

2. The air-conditioning system according to claim 1, wherein
the control unit is capable of switching the ventilation air volume between a plurality of air volumes including the first air volume and the second air volume, and
the first air volume is a lowest of the air volumes.

3. The air-conditioning system according to claim 1 or 2, further comprising:
an air conditioner to perform air conditioning in the room, wherein
the human detection sensor is provided in the air conditioner.

4. The air-conditioning system according to claim 1 or 2, wherein the human detection sensor is provided in the ventilator.

5. The air-conditioning system according to claim 1 or 2, further comprising:
an air conditioner to perform air conditioning in the room, wherein
the human detection sensor is provided at a position other than in the ventilator and the air conditioner.

6. The air-conditioning system according to any one of claims 1 to 5, wherein when the presence of a human is detected by the human detection sensor, the control unit determines a number of humans on the basis of a detection result from the human detection sensor and controls the ventilation air volume.

7. The air-conditioning system according to any one of claims 1 to 5, further comprising:
a carbon dioxide sensor to measure carbon dioxide concentration of air in the room, wherein
when the presence of a human is detected by the human detection sensor, the control unit controls the ventilation air volume on the basis of a measurement result from the carbon dioxide sensor.

8. A ventilator comprising:
an exhaust fan to send air taken from an inside of a room to an outside;
a supply fan to send air taken from the outside into the room;
a control unit to control a ventilation air volume of operation with the exhaust fan and the supply fan; and
a human detection sensor to detect presence or absence of a human in the room, wherein
the control unit is capable of switching the ventilation air volume to at least a first air volume and a second air volume higher than the first air volume, and sets the ventilation air volume to the first air volume when the presence of a human is not detected by the human detection sensor.
